# FASCICULE DE BREVET EUROPEEN

(11) **EP 0 955 238 B1**
(45) Date de publication et mention de la délivrance du brevet: **27.08.2003**
(21) Numéro de dépôt: 99490012.4
(22) Date de dépôt: 29.04.1999
(51) Int. Cl.: B65B 25/02, A01G 5/02

(54) **Machine pour former des grappes de bulbes**
Maschine zum Formen von Zwiebeltrauben
Bulbcluster forming machine

(30) Priorité: 04.05.1998 FR 9805855
(43) Date de publication de la demande: 10.11.1999
(73) Titulaire: Gieza, Paul, 62000 Dainville (FR)
(72) Inventeur: Gieza, Paul, 62000 Dainville (FR)
(74) Mandataire: Ecrepont, Robert

(56) Documents cités:
- FR-A- 2 746 598
- FR-A- 2 754 428
- US-A- 4 457 422

## Description

L'invention se rapporte à une machine pour former des grappes de bulbes, tels des oignons, des échalottes ou encore des aulx.

La fabrication des grappes de bulbes était encore récemment une technique essentiellement manuelle, par exemple, en FRANCE, on connaît des spécialistes de cette technique manuelle, tels "les Johnnies de Roscoff".

La technique manuelle consiste à utiliser un support longiligne sur lequel on applique la tige de chaque bulbe selon une orientation particulière puis on enroule autour de l'ensemble support et tiges, un lien qui maintient les bulbes sur le support.

En garnissant progressivement le support, on constitue un produit dénommé grappe ou épi selon la présentation obtenue.

En vue de mécaniser l'opération, on connaît, par exemple, une machine FR-A-2.632.812 dans laquelle le support est déplacé longitudinalement au fur et à mesure de la pose des bulbes et du lien.

Le cheminement du support et de l'épi se fait essentiellement horizontalement et, à cet effet, la machine comprend une table horizontale.

L'épi formé est continu et il est coupé ultérieurement à la longueur souhaitée.

Cette machine comprend :
- un dispositif d'aide au positionnement des bulbes sur le support,
- un distributeur de lien qui, sous l'action d'une commande, enroule sensiblement hélicoïdalement le lien autour du support avec les tiges des bulbes préalablement appliquées sur lui et,
- un moyen de déplacement de l'épi.

Dans cette machine, le moyen de déplacement de l'épi agit par traction à l'aide d'une griffe qui saisit les bulbes déjà fixés au support.

On connaît également une machine FR-A-2.746.598 selon laquelle le cheminement du support et de la grappe se fait essentiellement verticalement.

Dans cette machine, en raison du cheminement vertical, la grappe doit être coupée dés qu'elle est terminée et, à cet effet, la machine comprend juste en dessous du dispositif d'aide au positionnement, un dispositif de sectionnement.

La grappe tombe alors dans une goulotte à fond oblique pour être réceptionnée plus bas dans un panier ou sur un convoyeur.

Cette chute provoque généralement des meurtrissures à certains bulbes qui s'altèrent alors plus rapidement.

Egalement, cette chute se traduit généralement par le décrochement d'un ou plusieurs bulbes.

L'avance de la grappe se fait en poussant le support à l'aide de molettes légèrement obliques, ce qui provoque une légère rotation.

Le support doit donc être suffisamment rigide ce qui explique encore la nécessité de couper la grappe dès qu'elle est achevée.

On connaît également une machine (FR-A-2.754.428) suivant laquelle une pince saisit le support et l'entraîne vers le bas, un plateau soutenant la grappe en formation.

L'invention vise, notamment, à remédier aux inconvénients précités et, à cet effet, l'invention a pour objet une machine, du type précité, pour former des grappes de bulbes, tels des oignons, des échalottes ou encore des aulx par enroulement d'un lien autour des tiges de bulbes préalablement appliquées sur un support longiligne, cette machine comprenant donc :
- un dispositif d'alimentation du support longiligne,
- en dessous de ce dispositif d'alimentation, un dispositif d'aide au positionnement des bulbes sur le support,
- un distributeur de lien qui, sous l'action d'une commande, enroule hélicoïdalement le lien autour du support avec les tiges de bulbes préalablement appliquées sur lui et
- un moyen de déplacement de la grappe,
   cette machine étant caractérisée en ce que :

- d'une part, le moyen de déplacement de la grappe comprend :
   . à une distance prédéterminée, en dessous du dispositif d'aide au positionnement des bulbes sur le support, un convoyeur sans fin ayant sa face portante tournée vers le haut et définissant dans un plan vertical un parcours sinueux en S, comprenant un premier tronçon courbe dont la concavité est toumée vers le haut et un second tronçon courbe ramenant l'axe de la grappe dans un plan sensiblement horizontal et
   . au dessus du premier tronçon courbe de ce convoyeur sans fin, un élément presseur appliquant la grappe sur la face portante du convoyeur sans fin pour obtenir l'entraînement de la grappe et
- d'autre part, le dispositif d'aide au positionnement des tiges de bulbes est guidé en rotation autour d'un axe vertical et comprend des moyens de commande de sa rotation dans un sens puis dans l'autre sur une plage angulaire limitée.

L'invention sera bien comprise à l'aide de la description ci-après faite à titre d'exemple non limitatif en regard du dessin ci-annexé qui représente schématiquement :

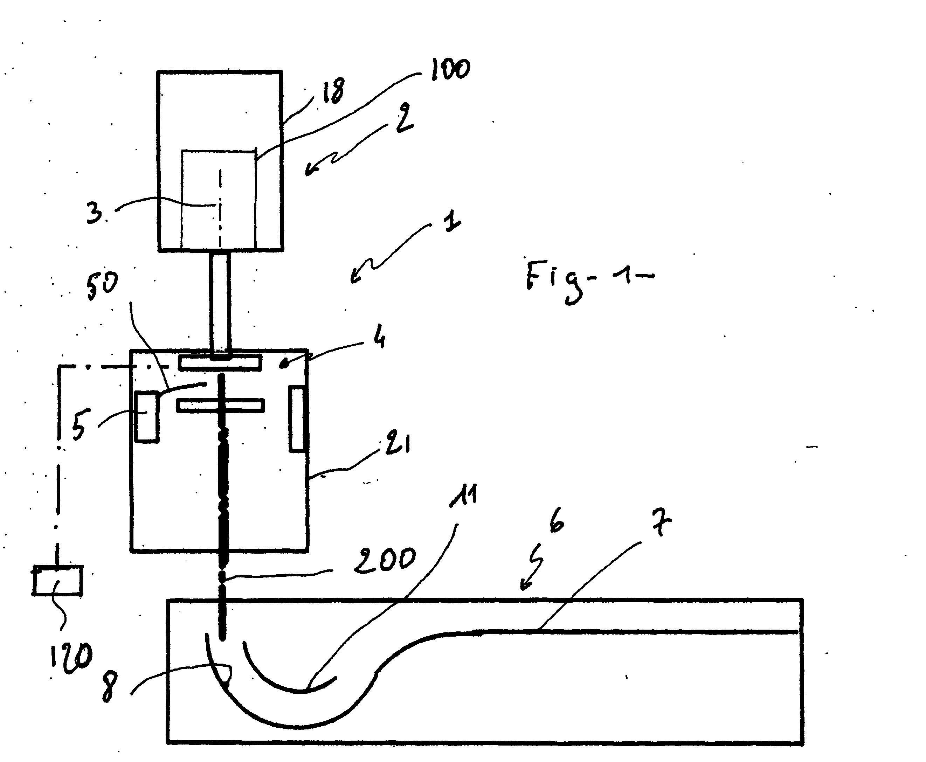

- figure 1 : une vue d'une machine selon l'invention,
- figures 2 à 4 : des détails de réalisation.

En se reportant au dessin, on voit une machine 1 pour la réalisation de grappes 200 de bulbes fixés sur un support longiligne.

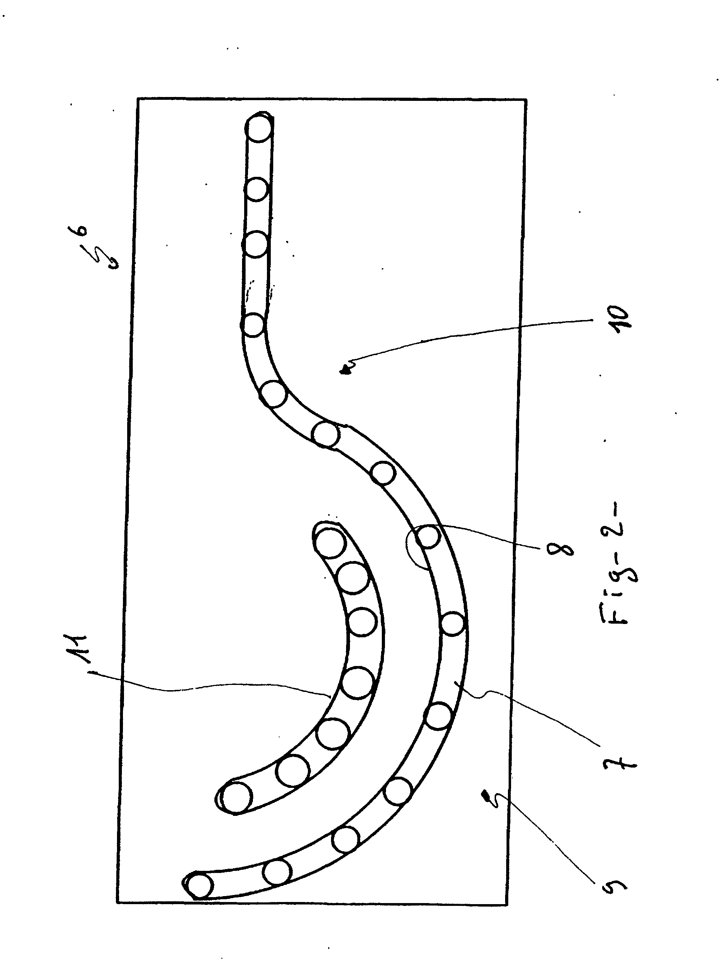

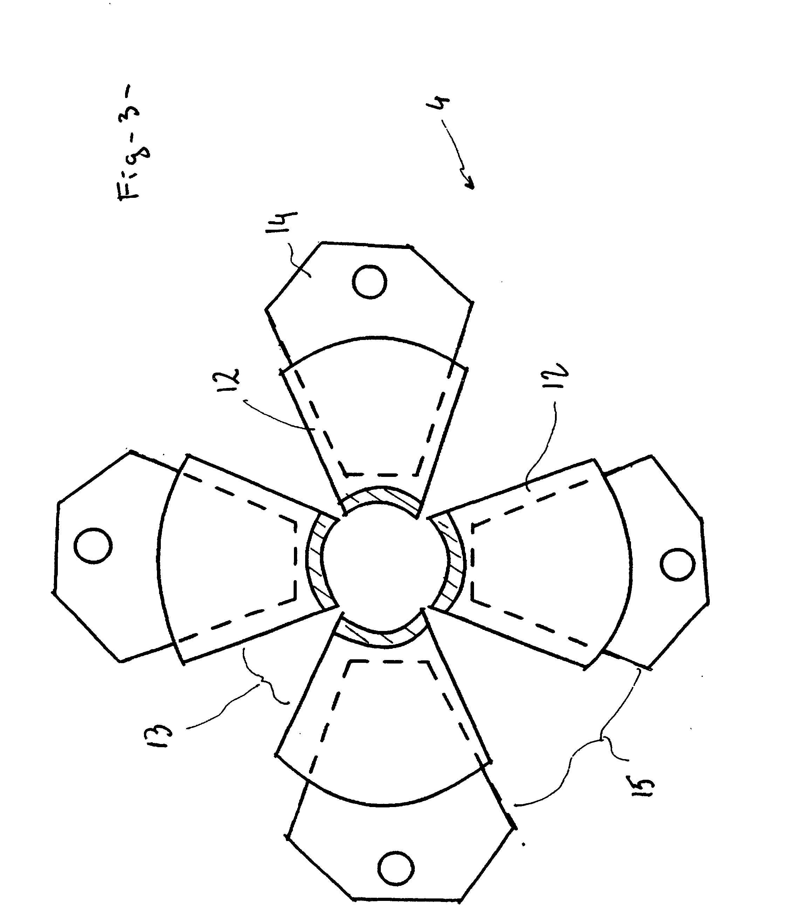

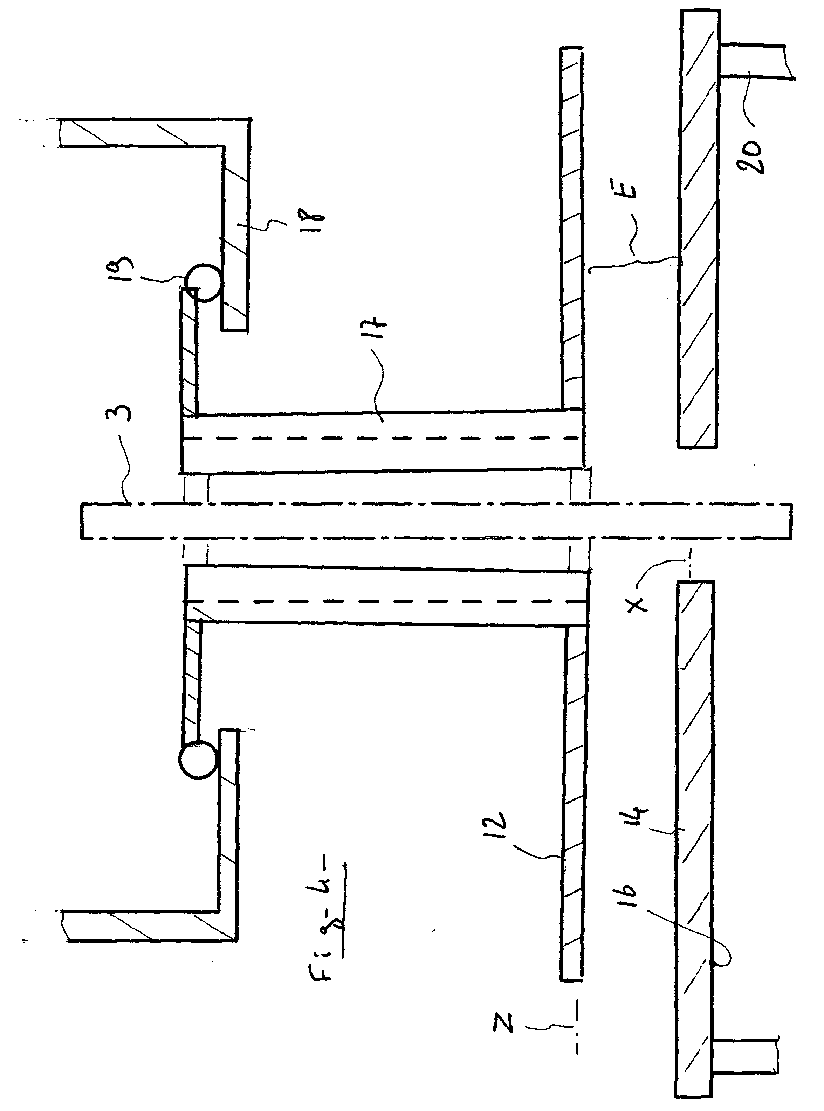

Classiquement, pour former des grappes de bulbes, tels des oignons, des échalottes ou encore des aulx, par enroulement d'un lien autour des tiges de bulbes préalablement appliquées sur un support longiligne, une telle machine comprend :
- un dispositif 2 d'alimentation du support 3 longiligne,
- en dessous de ce dispositif 2 d'alimentation, un dispositif 4 d'aide au positionnement des bulbes sur le support (figures 3, 4),
- un distributeur 5 de lien qui, sous l'action d'une commande, enroule hélicoïdalement le lien autour du support et des tiges de bulbes préalablement appliquées sur lui et
- un moyen 6 de déplacement de la grappe (figure 2).
   Selon une caractéristique de l'invention, dans la machine :

- d'une part, le moyen 6 de déplacement de la grappe comprend :
   . à une distance prédéterminée, en dessous du dispositif 4 d'aide au positionnement des bulbes sur le support 3, un convoyeur 7 sans fin ayant sa face 8 portante tournée vers le haut définissant dans un plan vertical un parcours sinueux en S, comprenant un premier tronçon 9 courbe dont la concavité est tournée vers le haut et un second tronçon 10 courbe ramenant la grappe dans un plan sensiblement horizontal et
   . au dessus du premier tronçon courbe de ce convoyeur sans fin, un élément 11 presseur appliquant la grappe sur la face portante du convoyeur sans fin pour obtenir l'entraînement de la grappe et
- d'autre part, le dispositif d'aide au positionnement des tiges de bulbes est guidé en rotation autour d'un axe vertical et comprend des moyens 120 de commande de sa rotation sur une plage angulaire limitée.

La distance libre entre l'entrée du dispositif d'entraînement et le dispositif d'aide au positionnement permet à la grappe d'absorber la torsion dûe à la rotation alternative en se vrillant suffisamment légèrement pour ne pas altérer celle-ci.

La commande en rotation alternative permet de positionner les bulbes selon des orientations précises de manière à obtenir une grappe avec présentation soignée.

Le convoyeur 7 sans fin est un convoyeur à bande et, de préférence, l'élément 11 presseur est également un convoyeur à bande sans fin, les bandes étant guidées par de nombreux rouleaux pour garantir une trajectoire optimisée (figure 2).

En figure 3, est représenté le dispositif d'aide au positionnement vu de dessus et, en figure 4, vu en coupe verticale.

Le dispositif d'aide au positionnement comprend.:
- dans un premier plan sensiblement horizontal Z, un premier jeu de surfaces 12 sensiblement en forme de pétales angulairement réparties et, régulièrement, écartées les unes des autres pour définir des entailles 13 radiales pour le positionnement angulaire des tiges des bulbes, ce premier jeu de surfaces étant commandé en rotation,
- dans un deuxième plan X situé sous le premier plan Z, un second jeu de surfaces 14 sensiblement en forme de pétales angulairement réparties et, régulièrement, écartées les unes des autres, d'une part, pour définir des entailles 15 radiales également pour le positionnement angulaire des tiges des bulbes et, d'autre part, pour constituer des surfaces 16 dites de références tournées vers le bas pour le positionnement axial des bulbes et
- le distributeur de lien agit de manière à enrouler le lien dans l'espace E délimité par les deux jeux de surfaces.

Généralement, mais non limitativement, chaque jeu comprend quatre pétales déphasés de 90° et la préposée, au positionnement des bulbes, commence par placer deux bulbes diamétralement opposés puis commande l'enroulement du lien avant de commander la rotation sur 90° du premier jeu de surfaces pour replacer les deux autres bulbes, soit à la même hauteur, soit plus haut dans la mesure où la grappe aura progressé entre-temps.

Le jeu de surfaces 12 revient ensuite dans sa position initiale par rotation inverse.

Chaque surface du premier jeu est portée par une suspente 17 dont la section est une fraction angulaire d'une paroi cylindrique et la concavité de cette fraction est tournée vers l'axe médian matérialisé par le support longiligne afin que les fractions angulaires des différentes suspentes constituent un puits de guidage pour le support.

Une section du puits que forment ces suspentes est variable, décroissante au fur et à mesure qu'elle se rapproche des surfaces en forme de pétales et, pour être rappelées vers la forme de puits, les dites suspentes sont maintenues entre elles par un organe élastique.

Ces suspentes sont portées par un cylindre 18 guidé en rotation logeant les supports 3 à utiliser et une fraction de la paroi de ce cylindre présente une découpe 100 pour permettre de saisir un support et de l'introduire dans le puits.

Ces suspentes sont fixées sur le cylindre au moyen d'une articulation 19.

Les surfaces 14 du deuxième jeu de pétales peuvent être fixes mais, de préférence, elles sont escamotables, de préférence, dans le plan horizontal de manière à laisser périodiquement un accès à la grappe formée de manière à pouvoir y placer une attache pour fixer le lien sur le support avant que, par section du support et des tiges, une grappe soit séparée de la grappe suivante et, pour ce mouvement, par exemple, chaque surface 14 sera portée par un axe 20 vertical fixé à son extrémité externe et commandé en rotation par un moyen moteur.

Un moyen de synchronisation permet de commander tous les axes 20.

Avantageusement, le lien 50 de fixation des tiges sur le support est un lien élastique.

Ce lien est porté par au moins une bobine fixée sur la face inteme d'un cylindre 21 guidé en rotation et mu en rotation par un moteur.

Cette machine permet de réaliser des grappes de bulbes dont la présentation visuelle est tout à fait correcte.

## Revendications

1. Machine pour former des grappes de bulbes, tels des oignons, des échalotes ou encore des aulx, par enroulement d'un lien autour des tiges de bulbes préalablement appliquées sur un support longiligne, comprenant :
- un dispositif (2) d'alimentation du support (3) longiligne, .
- en dessous de ce dispositif (2) d'alimentation, un dispositif (4) d'aide au positionnement des bulbes sur le support, le dispositif d'aide au positionnement des tiges de bulbes étant guidé en rotation autour d'un axe vertical et comprend des moyens (120) de commande de sa rotation sur une plage angulaire limitée,
- un distributeur (5) de lien qui, sous l'action d'une commande, enroule hélicoïdalement le lien autour du support et des tiges de bulbes préalablement appliquées sur lui et
- un moyen (6) de déplacement de la grappe,
cette machine étant **CARACTERISEE en ce que** :
le moyen (6) de déplacement de la grappe comprend :
. à une distance prédéterminée, en dessous du dispositif (4) d'aide au positionnement des bulbes sur le support (3), un convoyeur (7) sans fin ayant sa face (8) portante tournée vers le haut définissant dans un plan vertical un parcours sinueux en S, comprenant un premier tronçon (9) courbe dont la concavité est tournée vers le haut et un second tronçon (10) courbe ramenant la grappe dans un plan sensiblement horizontal et
. au dessus du premier tronçon courbe de ce convoyeur sans fin, un élément (11) presseur appliquant la grappe sur la face portante du convoyeur sans fin pour obtenir l'entraînement de la grappe et

2. Machine selon la revendication 1 **caractérisée en ce que** le convoyeur (7) sans fin est un convoyeur à bande et, de préférence, l'élément (11) presseur est également un convoyeur à bande sans fin, les bandes étant guidées par de nombreux rouleaux pour garantir une trajectoire optimisée.

3. Machine selon la revendication 1 **caractérisée en ce que** le dispositif d'aide au positionnement comprend :
- dans un premier plan sensiblement horizontal (Z), un premier jeu de surfaces (12) sensiblement en forme de pétales angulairement réparties et, régulièrement, écartées les unes des autres pour définir des entailles (13) radiales pour le positionnement angulaire des tiges des bulbes, ce premier jeu de surfaces étant commandé en rotation,
- dans un deuxième plan (X) situé sous le premier plan (Z), un second jeu de surfaces (14) sensiblement en forme de pétales angulairement réparties et, régulièrement, écartées les unes des autres, d'une part, pour définir des entailles (15) radiales également pour le positionnement angulaire des tiges des bulbes et, d'autre part, pour constituer des surfaces (16) dites de références tournées vers le bas pour le positionnement axial des bulbes et
- le distributeur de lien agit de manière à enrouler le lien dans l'espace (E) délimité par les deux jeux de surfaces.

4. Machine selon la revendication 3 **caractérisée en ce que** chaque surface (12) du premier jeu est portée par une suspente (17) dont la section est une fraction angulaire d'une paroi cylindrique et la concavité de cette fraction est tournée vers l'axe médian matérialisé par le support longiligne afin que les fractions angulaires des différentes suspentes constituent un puits de guidage pour le support.

5. Machine selon la revendication 4 **caractérisée en ce qu'**une section du puits que forment ces suspentes est variable, décroissante au fur et à mesure qu'elle se rapproche des surfaces en forme de pétales et, pour être rappelées vers la forme de puits, les dites suspentes sont maintenues entre elles par un organe élastique.

6. Machine selon la revendication 4 ou 5 **caractérisée en ce que** les suspentes sont portées par un cylindre (18) guidé en rotation logeant les supports (3) à utiliser et une fraction de la paroi de ce cylindre présente une découpe pour permettre de saisir un support et de l'introduire dans le puits.

7. Machine selon l'une quelconque des revendications 1 à 6 **caractérisée en ce que** les suspentes sont fixées sur le cylindre au moyen d'une articulation (19).

8. Machine selon la revendication 3 **caractérisée en ce que** les surfaces (14) du deuxième jeu sont escamotables.

9. Machine selon la revendication 8 **caractérisée en ce que** les surfaces (14) du deuxièmre jeu sont escamotables dans le plan horizontal de manière à laisser périodiquement un accès à la grappe formée et, pour ce mouvement, chaque surface (14) sera portée par un axe (20) vertical fixé à son extrémité exteme et commandé en rotation par un moyen moteur.

10. Machine selon la revendication 1 **caractérisée en ce que** le lien de fixation des tiges sur le support est un lien élastique.

## Patentansprüche

1. Maschine zur Bildung von Bündeln aus Pflanzenzwiebeln wie beispielsweise Speisezwiebeln, Schalotten oder auch Knoblauchzwiebeln durch Umwickeln der Stängel der Zwiebeln, die zuvor auf einen lang gestreckten Träger aufgelegt wurden, mit einem Binder, welche folgendes aufweist:
- eine Vorrichtung (2) zum Zuführen des lang gestreckten Trägers (3),
- unter dieser Zuführvorrichtung (2) eine Hilfsvorrichtung (4) zur Unterstützung beim Positionieren der Zwiebeln auf dem Träger, wobei die Hilfsvorrichtung zur Positionierung der Zwiebelstängel in Drehung um eine senkrechte Achse geführt ist und Einrichtungen (120) zum Ansteuern ihrer Drehbewegung über einen begrenzten Winkelbereich aufweist,
- eine Abgabevorrichtung (5) für den Binder, welche unter der Einwirkung einer Steuerung den Binder um den Träger und die zuvor auf diesen aufgelegten Zwiebeln spiralförmig wickelt, und
- eine Einrichtung (6) zum Befördern des Bündels,
**dadurch GEKENNZEICHNET, dass** die Einrichtung zum Befördern des Bündels folgendes aufweist:
- in einem vorgegebenen Abstand unter der Hilfsvorrichtung (4) zur Positionierung der Zwiebeln auf dem Träger (3) einen Endlosförderer (7), dessen nach oben weisende Tragfläche (8) in einer vertikalen Ebene einen sinusförmigen S-artigen Weg definiert und welcher einen ersten gebogenen Abschnitt (9) aufweist, dessen Vertiefung nach oben weist, sowie einen zweiten gebogenen Abschnitt (10), welcher das Bündel wieder in eine im Wesentlichen horizontale Ebene zurückführt.

2. Maschine nach Anspruch 1, **dadurch gekennzeichnet, dass** der Endlosförderer (7) ein Bandförderer ist und dass vorzugsweise das Andruckelement ebenfalls ein Endlos-Bandförderer ist, wobei die Förderbänder von zahlreichen Rollen geführt werden, um eine optimierte Bahn zu gewährleisten.

3. Maschine nach Anspruch 1, **dadurch gekennzeichnet, dass** die Hilfsvorrichtung zur Positionierung folgendes aufweist:
- in einer ersten, im Wesentlichen horizontalen Ebene (Z) eine erste Gruppe von Flächen (12), die im Wesentlichen die Form von unter einem Winkel regelmäßig verteilten Blütenblättem aufweisen, die von einander so beabstandet sind, dass zur Winkelpositionierung der Zwiebelstängel radial verlaufende Einschnitte definiert sind, wobei dieser erste Satz Flächen zu einer Drehbewegung angesteuert wird,
- in einer zweiten Ebene (X), die unter der ersten Ebene (Z) liegt, eine zweite Gruppe von Flächen (14), die im Wesentlichen die Form von unter einem Winkel regelmäßig verteilten Blütenblättern aufweisen, die von einander so beabstandet sind, dass zum einen ebenfalls zur Winkelpositionierung der Zwiebelstängel radial verlaufende Einschnitte (16) definiert sind, und zum anderen so genannte Bezugsflächen (16) gebildet werden, die zur Positionierung der Zwiebeln in axialer Richtung nach unten gedreht sind, und
- wobei die Abgabevorrichtung für den Binder in der Weise wirksam ist, dass sie den Binder in dem freien Raum (E), der von den beiden Gruppen von Flächen begrenzt ist, umwickelt.

4. Maschine nach Anspruch 3, **dadurch gekennzeichnet, dass** jede Fläche (12) aus der ersten Gruppe von einem Aufhänger (17) getragen wird, dessen Querschnitt einen Winkelbereich einer zylinderförmigen Wandung darstellt, wobei die Höhlung dieses Bereichs der Mittelachse zugewandt ist, welche in Form des lang gestreckten Trägers vorgesehen ist, damit die Winkelbereiche der verschiedenen Aufhänger einen Führungsschacht für den Träger bilden.

5. Maschine nach Anspruch 4, **dadurch gekennzeichnet, dass** ein Abschnitt des Schachts, der von diesen Aufhängern gebildet wird, veränderlich ist und entsprechend dem Maß, in dem er sich an die Flächen in Form von Blütenblättem annähert, kleiner wird, und dass die Aufhänger zur Rückstellung zur Schachtform unter einander mittels eines elastischen Elements gehalten werden.

6. Maschine nach Anspruch 4 oder 5, **dadurch gekennzeichnet, dass** die Aufhänger von einem Zylinder (18) getragen werden, der in einer Drehbewegung geführt wird, wobei er die zu verwendenden Träger (3) aufnimmt, und dass ein Teil der Wandung dieses Zylinders einen Ausschnitt aufweist, welcher es ermöglicht, einen Träger zu erfassen und in den Schacht einzuführen.

7. Maschine nach einem der Ansprüche 1 bis 6, **dadurch gekennzeichnet, dass** die Aufhänger an dem Zylinder mittels einer Anlenkung (19) befestigt sind.

8. Maschine nach Anspruch 3, **dadurch gekennzeichnet, dass** die Flächen (14) aus der zweiten Gruppe einziehbar sind.

9. Maschine nach Anspruch 8, **dadurch gekennzeichnet, dass** die Flächen (14) aus der zweiten Gruppe in der horizontalen Ebene in der Weise einziehbar sind, dass sie in regelmäßigen Zeitabständen einen Zugriff zu dem gebildeten Bündel gestatten, und dass für diese Bewegung jede Fläche (14) von einer vertikalen Achse (20) getragen wird, die an ihrem außen liegenden Ende befestigt ist und von einer Antriebseinrichtung in Drehung versetzt wird.

10. Maschine nach Anspruch 1, **dadurch gekennzeichnet, dass** der Binder zum Befestigen der Stängel auf dem Träger ein elastisches Bindeband ist.

## Claims

1. A machine for forming strings of bulbs, such as onions, shallots or heads of garlic, by winding a tie around the stems of bulbs previously applied to an elongate support, comprising:
- a device (2) for supplying the elongate support (3),
- beneath this supply device (2), a device (4) for assisting in positioning of the bulbs on the support, the device for assisting in bulb stem positioning being guided rotationally about a vertical axis and comprising means (120) of imparting rotation thereto over a limited angular range,
- a tie distributor (5) which, under the action of a control means, helically winds the tie about the support and the bulb stems previously applied thereto and
- a means (6) of displacing the string,
this machine being **CHARACTERISED in that**:
the means (6) of displacing the string comprises:
- at a predetermined distance beneath the device (4) for assisting in positioning the bulbs on the support (3), an endless conveyor (7) having its bearing face (8) turned upwards and defining a winding S-shaped course in a vertical plane, comprising a first curved portion (9) whose concavity faces upwards and a second curved portion (10) bringing the string into a substantially horizontal plane and
- above the first curved portion of said endless conveyor, a presser element (11) applying the string to the bearing face of the endless conveyor to drive the string along.

2. A machine according to claim 1, **characterised in that** the endless conveyor (7) is a belt conveyor and, preferably, the presser element (11) is also an endless belt conveyor, the belts being guided by numerous rollers to ensure an optimised path.

3. A machine according to claim 1, **characterised in that** the device for assisting in positioning comprises:
- in a first, substantially horizontal plane (Z), a first set of surfaces (12) substantially in the form of angularly distributed petals spaced regularly from one another so as to define radial notches (13) for angular positioning of the stems of the bulbs, this first set of surfaces having a rotational motion imparted thereto,
- in a second plane (X) situated below the first plane (Z), a second set of surfaces (14) substantially in the form of angularly distributed petals spaced regularly from one another, so as, on the one hand, to define radial notches (15) likewise for angular positioning of the stems of the bulbs and, on the other hand, to form downwardly facing "reference" surfaces (16) for axial positioning of the bulbs and
- the tie distributor acts in such a manner as to wind the tie round in the space (E) delimited by the two sets of surfaces.

4. A machine according to claim 3, **characterised in that** each surface (12) of the first set is carried by a suspending means (17), the section of which is an angular fraction of a cylindrical wall, the concavity of this fraction facing towards the median axis embodied by the elongate support in order for the angular fractions of the various suspending means to form a guide well for the support.

5. A machine according to claim 4, **characterised in that** a section of the well formed by said suspending means is variable, decreasing as it approaches the petal-shaped surfaces and, to be returned to the well shape, said suspending means are held in relation to one another by a resilient member.

6. A machine according to claim 4 or 5, **characterised in that** the suspending means are carried by a rotationally guided cylinder (18) accommodating the supports (3) to be used and a fraction of the wall of said cylinder exhibits a slot to allow a support to be gripped and introduced into the well.

7. A machine according to any one of claims 1 to 6, **characterised in that** the suspending means are fixed to the cylinder by means of a joint (19).

8. A machine according to claim 3, **characterised in that** the surfaces (14) of the second set are retractable.

9. A machine according to claim 8, **characterised in that** the surfaces (14) of the second set are retractable in the horizontal plane in such a way as to allow periodic access to the string formed and, for this movement, each surface (14) will be borne by a vertical shaft (20) fixed to its outer end and having rotational motion imparted thereto by a motive means.

10. A machine according to claim 1, **characterised in that** the tie fastening the stems to the support is a resilient tie.
